(19) Europäisches Patentamt
European Patent Office
Office européen des brevets

(11) **EP 2 125 472 B1**

(12) **EUROPÄISCHE PATENTSCHRIFT**

(45) Veröffentlichungstag und Bekanntmachung des Hinweises auf die Patenterteilung:
**11.07.2012 Patentblatt 2012/28**

(51) Int Cl.:
***B60W 30/20*** *(2006.01)*   ***B60W 10/20*** *(2006.01)*
***B62D 15/02*** *(2006.01)*

(21) Anmeldenummer: **08716976.9**

(22) Anmeldetag: **20.02.2008**

(86) Internationale Anmeldenummer:
**PCT/EP2008/052067**

(87) Internationale Veröffentlichungsnummer:
**WO 2008/104488 (04.09.2008 Gazette 2008/36)**

(54) **EINPARKHALBAUTOMAT**

SEMIAUTOMATIC PARKING MACHINE

SYSTÈME SEMI-AUTOMATIQUE DE STATIONNEMENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.02.2007 DE 102007009745**

(43) Veröffentlichungstag der Anmeldung:
**02.12.2009 Patentblatt 2009/49**

(73) Patentinhaber: **Cobra Automotive Technologies S.P.A.**
**21100 Varese (IT)**

(72) Erfinder:
• **OETIKER, Moritz**
  **CH-8050 Zürich (CH)**
• **BAKER, Gion**
  **CH-8307 Effretikon (CH)**

(74) Vertreter: **Ullrich & Naumann**
**Patent- und Rechtsanwälte**
**Schneidmühlstrasse 21**
**69115 Heidelberg (DE)**

(56) Entgegenhaltungen:
**EP-A- 1 400 410      WO-A-2006/064544**
**DE-A1- 10 322 829    DE-A1-102004 011 088**
**FR-A- 2 728 859      US-B1- 6 275 754**

**Beschreibung**

Die Erfindung betrifft ein Verfahren zum Steuern der Lenkung eines Fahrzeugs während eines Einparkvorgangs sowie eine Vorrichtung zur Durchführung des Verfahrens und ein entsprechendes Computerprogrammprodukt und bezieht sich insbesondere auf eine halbautomatische Einparkhilfe für Mehrspurfahrzeuge.

Ein Verfahren gemäß Oberbegriff des Anspruchs 1 ist aus der FR 2 728 859 A bekannt.

FR 2 728 859 A offenbart auch ein Vorrichtung zum Steuern der Lenkung eines Fahrzeugs während eines Einparkvorgangs mit:

- einer Sensoreinrichtung, die zum Vermessen eines Parkplatzes und zum Erkennen eines Hindernisses ausgebildet ist,
- einer Fahrzeuglage-Bestimmungseinrichtung, die zumindest zur Bestimmung der Fahrzeugposition und der Fahrzeugausrichtung ausgebildet ist,
- einer Bedienschnittstelle für die Eingabe von Anweisungen des Fahrzeugführers und/oder für die Ausgabe von Informationen an den Fahrzeugführer,
- einer elektromechanischen Steuereinrichtung zur Steuerung des Lenkeinschlags des Fahrzeugs und
- einer Parkweg-Leiteinrichtung zur Berechnung der von der elektromechanischen Steuereinrichtung zur Führung des Fahrzeugs entlang eines Einparkwegs einzustellenden Lenkeinschläge,

wobei die Parkweg-Leiteinrichtung aufweist:

- eine Parkplatz-Bestimmungseinrichtung, die im Zusammenwirken mit der Sensoreinrichtung zur Ermittlung der Geometrie des zum Einparken des Fahrzeugs gewählten Parkplatzes und von Hindernissen im Umfeld des Fahrzeugs ausgebildet ist,
- eine Orientierungsfeld-Erstellungseinrichtung, die zum Erstellen eines Orientierungsfeldes ausgebildet ist, das eine Anzahl von Lagepunkten innerhalb des gewählten Parkplatzes und im Umfeld des gewählten Parkplatzes bestimmt und jedem Lagepunkt jeweils eine Soll-Orientierung zuordnet, wobei das Orientierungsfeld aus einem ersten Orientierungsteilfeld und einem zweiten Orientierungsteilfeld aufgebaut wird, wobei das erste Orientierungsteilfeld die dem Parkplatz zugeordneten Soll-Orientierungen und das zweite Orientierungsteilfeld die einem Eckpunkt des Parkplatzes zugeordneten Soll-Orientierungen umfasst, wobei alle über die Soll-Orientierungen der Lagepunkte des zweiten Orientierungsteilfeldes definierten Einparkwegabschnitte in einem gemeinsamen Lagepunkt enden,
- eine Ausrichtungsabweichungseinrichtung, die zur Bestimmung der Abweichung der aktuellen Fahrzeugausrichtung an einem Lagepunkt von der für diesen Lagepunkt von dem Orientierungsfeld vorgegebenen Soll-Orientierung ausgebildet ist, und
- eine Lenkeinschlagsvorgabe-Einrichtung, die zur Berechnung einer Lenkeinschlagsvorgabe für die elektromechanische Steuereinrichtung auf der Grundlage der Ausrichtungsabweichung des Fahrzeugs von der Soll-Orientierung und zum Weiterleiten der Lenkeinschlagsvorgabe an die elektromechanische Steuereinrichtung ausgebildet ist.

Einparkhilfen unterstützen einen Fahrzeugführer beim Einparken seines Kraftfahrzeugs. Während in vergangenen Zeiten im Wesentlichen passive Einparkhilfen in Form von Orientierungsobjekten am Kraftfahrzeug oder auf dem Parkplatz vorherrschten, haben in den letzten Jahren vor allem aktive Einparkhilfen Vorrang gewonnen. In der Regel sind hierbei in den hinteren, bisweilen zusätzlich auch in den vorderen, Stoßfängern des Kraftfahrzeugs Ultraschallsensoren eingebaut, die mittels Laufzeitbestimmung der von ihnen ausgesandten und an Hindernissen reflektierten Ultraschallwellen den Abstand zu diesen Hindernissen messen. Unterschreitet der gemessene Abstand einen vorgegebenen Wert, so wird im Allgemeinen ein Warnsignal ausgegeben, dessen Wiederholfrequenz sich mit weiter verringerndem Abstand zunehmend erhöht. Diese so genannten aktiven Systeme mindern die Gefahr des Zusammenstoßes mit Gegenständen oder Personen, die sich in der Nähe des Kraftfahrzeugs befinden. Eine Unterstützung beim Einfahren in die Parklücke oder Parkbucht selbst erhält der Fahrzeugführer bei diesen Systemen jedoch nicht.

Hierfür wurden Fahrerassistenzsysteme entwickelt, die die Größe einer potentiellen Parklücke vermessen und die Lenkung des Fahrzeugs beim Einparken übernehmen. Entsprechende Einparkassistenten arbeiten meist halbautomatisch. Sie werden bei Bedarf vom Fahrzeugführer aktiviert und messen, wenn das Fahrzeug langsam an der Parklücke vorbeifährt, mittels Ultraschallsensoren den darin verfügbaren Platz aus. Nachdem der Fahrzeugführer das Fahrzeug angehalten hat, berechnet eine Steuereinrichtung des Einparkassistenten (unter der Voraussetzung dass die Parklücke groß genug ist) den idealen Einparkweg von dieser Startposition aus. Schließlich legt der Fahrzeugführer den Rückwärtsgang ein und beschränkt sich, während ein von der Steuereinrichtung kontrollierter Lenkaktor die Lenkung des Fahrzeugs übernimmt, auf Gasgeben, Kuppeln und Bremsen, bis die optimale Parkposition erreicht ist.

Die Berechnung einer Vorgabe für den Einparkweg durch das Fahrerassistenzsystem erfolgt dabei als Sollpfad vor Beginn des eigentlichen Einparkvorgangs. Der Sollpfad wird üblicherweise aus einer gemessen Fahrzeuganfangsposition, d.h. der Startposition, und gegebenenfalls einer gemessenen Fahrzeuganfangsorientierung relativ zur Parklücke sowie den zuvor erfassten Abmessungen der Parklücke bestimmt. Als Sollpfad wird in der Regel der Weg des Zentrums der Hinterachse gewählt, Unter Fahrzeugorientierung wird die Ausrichtung einer Fahrzeugachse, vornehmlich der Fahrzauglängsachse verstanden. Mit dem Sollpfad werden auch die den einzelnen Wegstrecken des Sollpfads zugeordneten Lenkwinkeleinstellungen im Voraus berechnet.

Der Lenkaktor wird dann im Verlauf des Einparkvorgangs entsprechend den für den jeweiligen Fortschritt des Fahrzeugs auf dem Sollpfads berechneten Lenkwinkeleinstellungen gesteuert.

In diesem Zusammenhang sei darauf hingewiesen, dass abweichend vom deutschen Sprachgebrauch in dieser Schrift der Begriff 'steuern' gleichbedeutend mit dem Begriff 'regeln' verwendet wird, sofern nicht explizit etwas anderes angegeben ist. Dies betrifft auch alle grammatikalischen Abwandlungen beider Begriffe. In dieser Schrift kann daher der Begriff 'Steuerung' ebenso eine Rückführung einer Regelgröße bzw. deren Messwerts umfassen, wie sich der Begriff 'Regelung' auf eine einfache Steuerkette beziehen kann.

Bei den oben beschriebenen Einparkassistenten wird während des Einparkvorgangs keine Veränderung des Sollpfades vorgenommen. Bei ungenau erfassten Abmessungen der Parklücke oder plötzlichen veränderungen der Fahrzeugumgebung, wie z.B. einem seine Position veränderndem Fahrzeug, findet daher auch keine Anpassung der Einparkwegvorgabe statt.

Ferner ist bei diesen Systemen die Einparkgeschwindigkeit auf eine Höchstgeschwindigkeit begrenzt, bei der der Lenkaktor die erforderliche Pfadkrümmung gerade noch wie vorgegeben einstellen kann. Da zum Berechnungszeitpunkt des Sollpfads die Fahrgeschwindigkeit beim Einparken nicht bekannt ist, wird im Allgemeinen eine niedrige Geschwindigkeit zugrunde gelegt, die auch bei engen Parklücken, die einen starken Lenkeinschlag erfordern, gute Resultate erbringt. Fährt der Fahrzeugführer jedoch mit einer höheren Geschwindigkeit, dann kann der Lenkaktor die erforderlichen Lenkeinschläge nicht mehr korrekt einstellen, wodurch sich das Fahrzeug vom Sollpfad entfernt und nicht tief genug in die Parklücke einfährt.

Ausgehend hiervon liegt der Erfindung die Aufgabe zugrunde, ein Verfahren, eine Vorrichtung und ein entsprechendes Computerprogrammprodukt anzugeben, wonach eine Anpassung des Einparkwegs an die Geschwindigkeit des einparkenden Fahrzeugs und an Veränderungen in dessen Umgebung ermöglicht.

Die Aufgabe wird durch ein verfahren mit den Merkmalen des Anspruchs 1, eine Vorrichtung gemäß Anspruch 12 und ein Computerprogrammprodukt nach Anspruch 15 gelöst.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z.B. Verfahrensschritten, Einrichtungen, Bereichen, Größen und dergleichen aufzufassen ist, die in keiner Weise das Vorhandensein anderer oder zusätzlicher Merkmale oder Gruppierungen von anderen oder zusätzlichen Merkmalen ausschließt.

Um auf einfache Weise die Lage des Fahrzeugs relativ zum Parkplatz zu behandeln, wird das Orientierungsfeld aus einem ersten Orientierungsteilfeld und einem zweiten Orientierungsteilfeld aufgebaut, wobei das erste Orientierungsteilfeld die dem Parkplatz zugeordneten Soll-Orientierungen und das zweite Orientierungsteilfeld die einem Eckpunkt des Parkplatzes zugeordneten Soll-Orientierungen umfasst. Erfindungsgemäß wird das zweite Orientierungsteilfeld hierbei so mit dem ersten Orientierungsteilfeld verbunden, dass die Lage des gemeinsamen Lagepunkts der Einparkwegabschnitte des zweiten Orientierungsteilfelds mit der Lage eines Lagepunkts des ersten Orientierungsteilfelds übereinstimmt, dessen Entfernung von dem Eckpunkt des Parkplatzes ausreichend groß ist, damit das an diesem Lagepunkt befindliche Fahrzeug bei der an diesem Lagepunkt vorgegebenen Soll-Orientierung den Eckpunkt des Parkplatzes nicht berührt.

Die Erfindung ermöglicht eine flexible Steuerung eines Fahrzeugs beim Einparkvorgang ohne auf einen Sollpfad für den Einparkweg festgelegt zu sein, indem an jeder möglichen Position des einparkenden Fahrzeugs eine Richtung angegebenen werden, die das Fahrzeug einschlagen muss, um sich dem Zielpunkt des Einparkvorgangs zu nähern.

Die Erfindung wird in ihren abhängigen Ansprüchen weitergebildet.

Um einen definierten Endpunkt eines Einparkvorgangs zu erhalten, bildet einer der Lagepunkte aus der Anzahl von Lagepunkten zweckmäßig den Zielpunkt eines Einparkwegs des Fahrzeugs. Vorteilhaft entspricht die einem Lagepunkt zugeordnete Soll-Orientierung der Ausrichtung der Tangente an einen durch den Lagepunkt führenden Einparkweg, womit eine einfache Wegführung erreicht wird. Indem alle über die Soll-Orientierungen der Lagepunkte definierten Einparkwege denselben Zielpunkt aufweisen, wird das Fahrzeug vorteilhaft unabhängig vom eingeschlagenen Einparkweg stets an denselben zielpunkt geführt. Damit wird eine definierte Parkstellung unabhängig vom Einparkweg erreicht.

Um abrupte Lenkänderungen zu vermeiden wird das zweite Orientierungsteilfeld beim Verbinden mit dem ersten Orientierungsteilfeld bevorzugt so gedreht, dass die Soll-Orientierung des gemeinsamen Lagepunkts des zweiten Orientierungsteilfeldes mit der Soll-Orientierung des Lagepunkts des ersten Orientierungsteilfeldes übereinstimmt, mit dessen Lage der gemeinsame Lagepunkt in Übereinstimmung gebracht wird.

Vorzugsweise erfolgt das Steuern des Lenkeinschlags des an einem Lagepunkt des Orientierungsfeldes befindlichen Fahrzeugs auf der Grundlage der Abweichung zwischen der an diesem Lagepunkt von dem Fahrzeug eingenommenen Ist-Orientierung und der für diesen Lagepunkt vorgegebenen Soll-Orientierung.

Um flexibel auf Veränderungen der Einparksituation eingehen zu können, wird das Fahrzeug, sobald erkannt wird, dass bei Befolgen der Soll-Orientierungen des Orientierungsfeldes eine Kollisionsgefahr mit einem Hindernis besteht, zweckmäßig solange entlang einer um das Hindernis führenden Ausrichtung geleitet, bis die Kollisionsgefahr nicht mehr besteht. Bedarfsweise wird der für die um das Hindernis führende Ausrichtung erforderliche Lenkwinkel aus dem mit den Sensoren bestimmten Abstand nach einer Regelvorgabe so berechnet, dass das Fahrzeug einen Mindestabstand zum Hindernis einhält.

Vorteilhaft erfolgt die um das Hindernis führende Ausrichtung durch ein Neuerstellen des Orientierungsfeldes mittels einer Verschiebung des gemeinsamen Lagepunkts des zweiten Orientierungsteilfeldes an einen weiteren Lagepunkt des ersten Orientierungsteilfeldes, dessen Abstand zu dem Hindernis und dessen Soll-Orientierung geeignet ist, damit das an diesem weiteren Lagepunkt befindliche Fahrzeug bei der an diesem Lagepunkt vorgegebenen Soll-Orientierung das Hindernis nicht berührt. Alternativ oder ergänzend kann die um das Hindernis führende Ausrichtung parallel zur seitlichen Begrenzung des Parkplatzes orientiert sein, bis eine Wegstrecke zurückgelegt wurde, ab der ein kollisionsfreies Einscheren in den Parkplatz möglich ist. Verkürzt sich der Parkplatz im rückwärtigen Bereich, so wird bevorzugt der Zielpunkt der dem Orientierungsfeld zugrunde liegenden Einparkwege verschoben.

Weitere Merkmale der Erfindung ergeben sich aus der folgenden Beschreibung erfindungsgemäßer Ausführungsbeispiele in Verbindung mit den Ansprüchen sowie den Figuren. Die einzelnen Merkmale können bei einer Ausführungsform gemäß der Erfindung je für sich oder zu mehreren verwirklicht sein. Bei der nachfolgenden Erläuterung einiger Ausführungsbeispiele der Erfindung wird auf die beiliegenden Figuren Bezug genommen, von denen

Figur 1      einen Einparkvorgang veranschaulicht,

Figur 2      eine schematische Darstellung der Sensorerfassungsbereiche eines Einparkassistenten zeigt,

Figur 3      ein Blockschaltbild des Einparkassistenten zeigt,

Figur 4      ein Beispiel einer Pfadschar für ein Basisfeld zeigt,

Figur 5      den einer Parklücke zugeordneten Parkplatz mit Angabe des Basiskoordinatensystems und des Eckpunkts des Parkplatzes zeigt,

Figur 6      die Soll-Orientierungen des Basisfelds am Ort der ihnen zugeordneten Lagepunkte veranschaulicht,

Figur 7      ein Beispiel einer Pfadschar für ein Übergabefeld zeigt,

Figur 8      ein Beispiel für das Zusammenfügen von Basis- und Übergabefeld 5 veranschaulicht,

Figur 9      die in dem nach dem Beispiel von Figur 7 gebildeten Orientierungsfeld definierten Soll-Orientierungen als Richtungsvektoren an den zugehörigen Lagepunkten veranschaulicht,

Figur 10     in einem Flussdiagramm die wesentlichen vom Einparkassistenten ausgeführten Verfahrensschritte zur Unterstützung des Fahrzeugführers beim Einparkvorgang zeigt,

Figur 11     ein Beispiel eines zweistufigen Einparkvorgangs mithilfe des Einparkassistenten zeigt,

Figur 12     die vom Einparkassistenten bei unterschiedlichen Fahrzeuggeschwindigkeiten verfolgten unterschiedlichen Einparkwege zeigt,

Figur 13     die Reaktion des Einparkassistenten auf eine Verschiebung des Eckpunkts des Parkplatzes veranschaulicht und

Figur 14     die Reaktion des Einparkassistenten auf eine Verengung des Ausschwenkbereichs veranschaulicht.

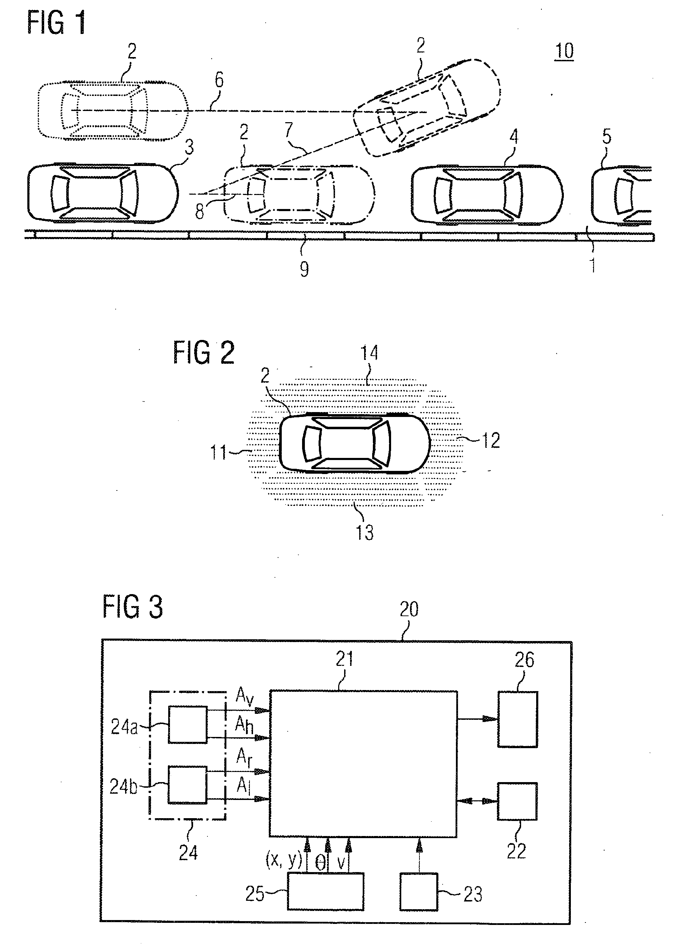

Die Figur 1 zeigt einen typischen Einparkvorgang 10 beim Längsparken innerhalb von Ortschaften. Auf der Fahrbahn 1 befinden sich nahe der Fahrbahnbegrenzung 9 mehrere längsparkende Fahrzeuge 3, 4 und 5. Die zwischen den Fahrzeugen 3 und 4 bestehende Lücke ist groß genug, damit ein weiteres Fahrzeug darin parken kann, wodurch eine so genannte Parklücke gegeben ist. Da zum Einparken nicht nur Parklücken, sondern auch andere Möglichkeiten, wie z.B. Parkbuchten oder auch umbaute, teilweise umbaute oder nur gekennzeichnete Stellplätze benutzt werden können, werden die verschiedenen Abstellmöglichkeiten für Fahrzeuge im Folgenden unter dem allgemeinen Begriff 'Parkplatz' zusammengefasst, wobei dieser Begriff in dieser Schrift auf eine Abstellmöglichkeit für ein einzelnes Fahrzeug begrenzt ist.

Beim in der Figur 1 veranschaulichten Rückwärtsparken fährt das Fahrzeug 2 entlang dem als gestrichelte Linie 6 gezeigten Pfad an dem Fahrzeug 3 vorbei, das die Parklücke nach hinten begrenzt, bis zur Höhe des den Parkplatz nach vorne begrenzenden Fahrzeugs 4. Zum Einparken legt der Fahrzeugführer des Fahrzeugs 2 den Rückwärtsgang ein und lenkt das Fahrzeug 2 entlang des durch die gestrichelt gezeichneten Linienabschnitte 7 und 8 dargestellten Einparkwegs in seine Parkstellung.

Zur Teilautomatisierung des Einparkvorgangs aktiviert der Fahrzeugführer den Einparkassistenten 20 (siehe Figur 3), beispielsweise an der durch das gepunktet dargestellte Fahrzeug 2 gezeigten Position. Die Aktivierung wird über eine Bedien- bzw. Benutzerschnittstelle 22 vorgenommen. Üblicherweise erfolgt die Aktivierung vor Erreichen der Parklücke; sie ist jedoch auch später noch unter der Bedingung möglich, dass der Einparkassistent 20 über die Sensoreinrichtung 24 den in der Lücke verfügbaren Parkplatz mit ausreichender Genauigkeit vermessen kann. Die Vermessung des Parkplatzes erfolgt während das Fahrzeug 2 die Parklücke passiert. Zum Einleiten des Parkvorgangs hält der Fahrzeugführer sein Fahrzeug 2 in etwa in Höhe des den Parkplatz nach vorne begrenzenden Fahrzeugs 4 an. Der Einparkassistent 20 erstellt nun ein Orientierungsfeld, worin in dem vermessenen Parkplatz und zumindest in dem vom Fahrzeug zum Einscheren in die Lücke beanspruchten Bereich eine Anzahl von Lagepunkten festgelegt sind und worin jedem dieser Lagepunkte eine Soll-Orientierung in Form einer Winkelvorgabe zugeordnet ist.

Mit Einlegen des Rückwärtsgangs durch den Fahrzeugführer wird der mit der aktuellen Position des Fahrzeugs 2 übereinstimmende Lagepunkt des Orientierungsfeldes ermittelt und die aktuelle Ausrichtung des Fahrzeugs 2 wird mit der diesem Lagepunkt zugeordneten Soll-Orientierung verglichen. Weicht die Ausrichtung des Fahrzeugs 2 von der Soll-Orientierung ab, so steuert der Einparkassistent 20 den Lenkeinschlag entsprechend der Abweichung nach. Dieses Nachstellen des Lenkeinschlags erfolgt an allen von Fahrzeug 2 während des rückwärtigen Einparkens passierten Lagepunkten (gestrichelt dargestelltes Fahrzeug 2), bis das Fahrzeug (unter Berücksichtigung eines gewissen Sicherheitsabstands zum rückwärtigen Fahrzeug) das rückwärtige Ende des Parkplatzes oder bereits seine endgültige Parkposition (strichpunktiert dargestelltes Fahrzeug 2) erreicht hat. Vom hinteren Rand des Parkplatzes kann das Fahrzeug 2 dann entweder ohne Unterstützung des Einparkassistenten oder mit Unterstützung des Assistenten zu seiner endgültigen Parkposition gefahren werden. Wird der Einparkassistent verwendet, so kann ein weiteres Orientierungsfelds für die Parklücke in Vorwärtsrichtung erstellt werden. In einigen Fällen wird das Fahrzeug jedoch nur gerade gestellt, so dass das ursprüngliche Orientierungsfeld und Verwendung eines neuen Endpunkts dieser zweiten Stufe des Einparkvorgangs gewählt werden kann.

Im Allgemeinen steuert der Einparkassistent 20 während des Einparkvorgangs nur die Lenkung. Das Einlegen der Gänge, Gasgeben, Kuppeln und Bremsen obliegt dem Fahrzeugführer. Es handelt sich bei dem Einparkassistenten daher um ein halbautomatisches System. Entsprechend des mit der Sensoreinrichtung 24 erfassten Abstands zu den anderen Fahrzeugen bzw. zu anderen Gegenständen und Personen kann der Einparkassistent dem Fahrzeugführer jedoch ein Signal zum Bremsen geben. Entsprechend einer vorteilhaften Weiterentwicklung kann die Bremsung des Fahrzeugs vom Einparkassistenten jedoch zumindest dann automatisch vorgenommen werden, wenn von dem Fahrzeug 2 ein bestimmter Abstand zu einem Gegenstand oder einer Person unterschritten wird.

Um ein kollisionsfreies Einparken zu ermöglichen, misst die Sensoreinrichtung 24 die Abstände zu Gegenständen und Personen im Umfeld des Fahrzeugs 2. Zweckmäßig ist die Sensoreinrichtung 24 daher mit mehreren Sensoren ausgestattet, die, wie in der Figur 2 veranschaulicht, einen Bereich rund um das Fahrzeug 2 erfassen. Bei Verwendung von Ultraschallsensoren sind die Sensoren vorteilhaft in den Stoßfängern eingebaut. Zur lückenlosen Erfassung der seitlichen Bereiche des Fahrzeugs können weitere Ultraschallsensoren auch im Bereich der Türschweller angeordnet sein. Es lassen sich dann Erfassungsbereiche 11, 12, 13 und 14 ähnlich den in Figur 2 dargestellten realisieren. Statt Ultraschall oder anderen laufzeitbasierenden Systemen wie Radar oder Lidar bietet sich auch die Verwendung von Kameras in Verbindung mit einer Bildauswertung zur Bestimmung der Abstände und zur Vermessung der Parklücke an. Sensorsysteme zur Abstandsmessung -warnung im Heck- und Frontbereich von Fahrzeugen gehören gegenwärtig zur Standardausstattung von Neufahrzeugen. Daher können diese existierenden Systeme 24a in die Sensoreinrichtung 24 integriert und um ein Sensorsystem 24b für die Abstandsmessung bzw. -warnung in den beiden Seitenbereichen des Fahrzeugs erweitert werden. Basierend auf den Messungen liefert die Sensoreinrichtung 24 die jeweils aktuellen Werte der Abstände $A_v$ zu Hindernissen im Frontbereich des Fahrzeugs, $A_h$ zu Hindernissen im Heckbereich des Fahrzeugs, $A_r$ zu Hindernissen rechts vom Fahrzeug und $A_l$ zu Hindernissen links vom Fahrzeug.

Der Einparkassistent 20 umfasst ferner eine Fahrzeuglage-Bestimmungseinrichtung 25, die zum Erfassen der aktuellen Position (x, y) und der aktuellen Ausrichtung θ des Fahrzeugs 2 relativ zum Parkplatz ausgebildet ist. Die Fahrzeuglage-Bestimmungseinrichtung 25 kann darüber hinaus auch zur Ermittlung der Fahrzeuggeschwindigkeit v ausgebildet sein. Vorzugsweise umfasst die Fahrzeuglage-Bestimmungseinrichtung 25 eine Odometrieeinrichtung, die eine Bestimmung von Fahrzeugposition, -ausrichtung und -geschwindigkeit aus der Messung der Bewegung von zumindest einem Rad des Fahrzeug ableitet, wobei vorzugsweise der Durchmesser von wenigstens einem der Hinterräder herangezogen wird.

Da der eigentliche Einparkvorgang beim Rückwärtsparken mit dem Einlegen des Rückwärtsgangs eingeleitet wird, weist der Einparkassistent 20 weiterhin eine Gangwahl-Erkennungseinrichtung 23 auf, die zumindest zum Detektieren eines eingelegten Rückwärtsgangs ausgebildet ist. Die Information über den aktuell eingelegten Gang wird in Form eines elektrischen Signals an die Parkweg-Leiteinrichtung 21 weitergeleitet.

Eine Bedienschnittstelle 22 dient sowohl der Aktivierung des Einparkassistenten als auch zur Ausgabe von Hinweisen oder Anweisungen an den Fahrzeugführer. Im einfachsten Fall umfasst die Bedienschnittstelle 22 eine optische Signallampe oder eine LED um die Aktivierung des Einparkassistenten anzuzeigen. Graphische oder textliche Ausgaben können jedoch auch mittels eines bordeigenen Bildschirms angezeigt werden. Für eine schnelle Kommunikation empfiehlt sich eine audiogestützte oder audiovisuelle Ausgabe.

Die eigentliche Steuerung des Lenkeinschlags erfolgt über die elektromechanische Lenksteuerung 26. Diese umfasst eine elektronische Steuerung und einen damit gesteuerten Lenkaktor, der den Einschlagwinkel der Vorderräder einstellt. Die Steuerung des Lenkaktors erfolgt auf der Grundlage von Lenkeinschlagsignalen, die von der Parkweg-Leiteinrichtung 21 entsprechend einem der nachfolgend beschriebenen Verfahren erzeugt werden.

Nach dem Aktivieren des Einparkassistenten 20 führt die Parkweg-Leiteinrichtung 21 zunächst eine Vermessung der Parklücke mithilfe der Sensoreinrichtung 24 durch. Aus den Messdaten werden die Abmessungen des darin verfügbaren Parkplatzes ermittelt und in einer Speichereinrichtung des Einparkassistenten 20 oder in einer diesem zugänglichen Speichereinrichtung gespeichert. Um den Berechnungsaufwand gering zu halten, wird der Parkplatz durch eine rechteckförmige Geometrie angenähert, die sich innerhalb der verfügbaren Parklücke befindet. Zur vereinfachten Darstellung wird nachfolgend nicht zwischen dem realen Parkplatz und seiner virtuellen Darstellung in Form von Daten über dessen Geometrie unterschieden. Neben der Vermessung der Parklücke selbst ermöglicht die sensorgestützte Vermessungseinrichtung auch die Bestimmung der Position des Fahrzeugs 2 relativ zum Parkplatz. Die Lerikunterstützung beim Einparken beginnt an der Position, bei der der Fahrzeugführer die Fahrtrichtung wechselt bzw. den Rückwärtsgang einlegt; diese Position wird im Folgenden als Startposition bezeichnet.

Nach Abschluss der Parkplatzvermessung erstellt die Parkweg-Leiteinrichtung 21 ein Feld von Lagepunkten das sowohl die Parklücke als auch einen Bereich neben der Parklücke abdeckt, der die Startposition des Fahrzeugs 2 mit der Parklücke verbindet. Jedem der Lagepunkte ist eine Soll-Orientierung zugeordnet, die die Richtung eines Pfades an dieser Stelle wiedergibt, auf dem das Fahrzeug von diesem Lagepunkt aus am besten zu einem in der Parklücke gelegenen Zielpunkt einfahren würde. Lagepunkte und zugeordnete Soll-Orientierungen bilden somit ein Orientierungsfeld, in dem sowohl der Startpunkt des Fahrzeugs 2 als auch der Zielpunkt des Einparkvorgangs aufgenommen sind, und das dem Fahrzeug 2 an jeder von dem Feld abgedeckten Position die günstigste Richtung zum Zielpunkt weist.

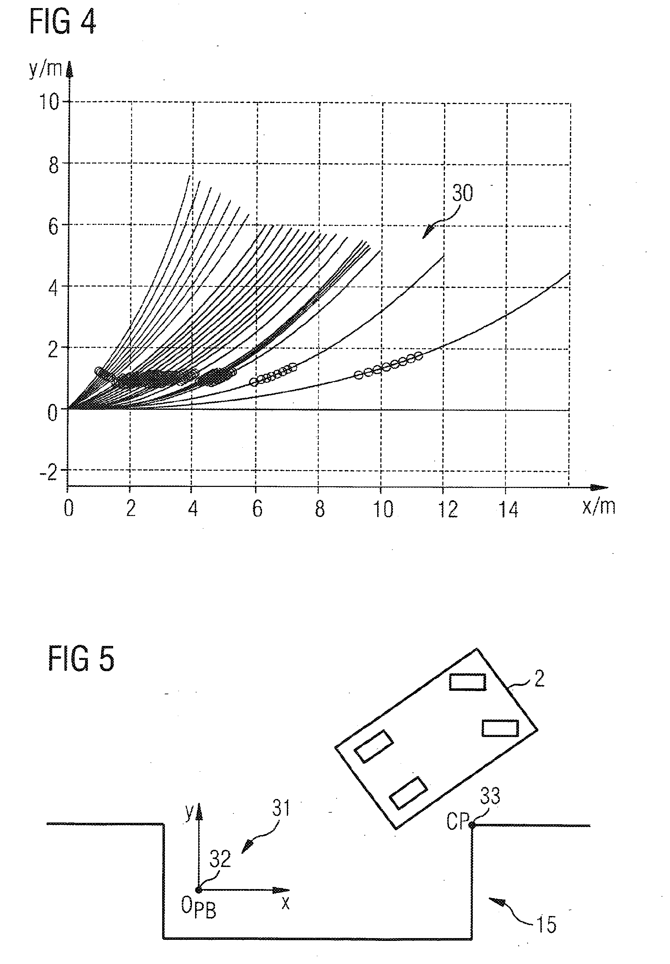

Nach Verlassen der Startposition in Richtung des Parkplatzes werden die jeweils aktuelle Position und Ausrichtung des Fahrzeugs 2 regelmäßig erfasst. Die Bestimmung erfolgt vorzugsweise im Rahmen eines (kartesischen) Koordinatensystems 31, dessen Ursprung mit dem Zielpunkt des Einparkvorgangs identisch ist und das eine in etwa parallel mit einer der Kanten des Parkplatzes verlaufende Koordinatenachse aufweist (siehe z.B. Figur 5). Andere Koordinatensysteme mit anders gelegenen Ursprüngen können selbstverständlich ebenfalls verwendet werden. Sie bieten sich insbesondere dann an, wenn sich die Berechnung des Orientierungsfeldes dadurch einfacher, d.h. mit geringerem Rechenaufwand durchführen lässt.

Nach jeder Erfassung einer Fahrzeugposition und -ausrichtung vergleicht die Parkweg-Leiteinrichtung 21 die erfasste Fahrzeugausrichtung mit der Soll-Orientierung, die dem Lagepunkt im Orientierungsfeld zugeordnet ist, der der erfassten Fahrzeugposition entspricht. Stimmt die gegenwärtige Fahrzeugausrichtung nicht mit der zugehörigen Soll-Orientierung überein, so erzeugt die Parkweg-Leiteinrichtung 21 ein die Abweichung berücksichtigendes Lenksteuersignal, das an die elektromechanische Lenksteuerung 26 zur Lenkkorrektur weitergeleitet wird. Das Lenksteuersignal kann auf ein bloßes Lenkkorrektursignal beschränkt sein, es kann aber auch den jeweils von der Lenkung des Fahrzeugs 2 einzunehmenden aktuellen Lenkeinschlag repräsentieren.

Statt einen Sollpfad für den Einparkweg vorzugeben, gibt das Orientierungsfeld für jeden Punkt in einem Flächenbereich, der den Start- und Zielpunkt des Einparkvorgangs überdeckt, eine Richtung an, die das Fahrzeug zum Zielpunkt geleitet. Um eine Abschätzung der in dem Parkplatz zu erreichenden Zielposition zu ermöglichen, kann nach dem Erstellen des Orientierungsfeldes ein Vorschlag für einen Einparkweg berechnet werden, anhand dessen sich zu Beginn des Einparkvorgangs die zu erwartende Qualität des Einparkmanövers beurteilen lässt. Weicht das Fahrzeug 2 während des Einparkens jedoch aufgrund zu hoher Geschwindigkeit oder plötzlich auftretender oder sich verlagernder Hindernisse von diesem Einparkwegvorschlag ab, so muss es nicht wie bei den oben beschriebenen bekannten Systemen auf diesen vorgeschlagenen Weg zurückgelenkt oder dieser neu berechnet werden, sondern es folgt den Orientierungsvorgaben, die sich aus dem Orientierungsfeld für seine jeweiligen Positionen ergeben. Anders ausgedrückt führt ein Abweichen vom zunächst verfolgten Einparkweg auf einen neuen Einparkweg. Eine Neuberechnung des neuen Einparkwegs ist nicht erforderlich.

Zur besseren Handhabung verschiedener Parklückendimensionen und sich verändernder Hindernisse wird das Orientierungsfeld aus zwei einzelnen Teilfeldern zusammengesetzt. Das erste dieser beiden Orientierungsteilfelder ist mit dem Zielpunkt des Einparkvorgangs innerhalb des Parkplatzes verknüpft. Es dient der Zielpunktführung des Fahrzeugs 2 innerhalb des Parkplatzes; aufgrund seiner Fixierung an die Parklücke wird es als Ursprungs- oder Basisfeld bezeichnet. Die in dem Basisfeld enthaltenen Soll-Orientierungen geben jeweils die Richtung an, die das Fahrzeug auf seinem Weg zum Zielpunkt an den jeweiligen Positionen einschlagen soll. Das zweite der Orientierungsteilfelder ist mit einem Übergabepunkt verknüpft, an dem das Fahrzeug 2 aus dem zweiten Orientierungsteilfeld in das erste Orientierungsteilfeld überführt wird. Die Lage des Übergabepunkts ergibt sich aus den Abmessungen der Parklücke bzw. des darin verfügbaren Parkplatzes und dem bzw. den darin verfügbaren Zielpunkten. Die Lage des Übergangspunktes ist durch die Anforderung einer kollisionsfreien Überführung des Fahrzeugs 2 von der Startposition in den Parkplatz definiert.

Das Fahrzeug wird an den Übergabepunkt mit der Ausrichtung herangeführt, die der Soll-Orientierung desjenigen Lagepunkts entspricht, der in dem Basisfeld dem Übergabepunkt entspricht. Damit kann das Ursprungsfeld das Fahrzeug 2 mittels seiner Orientierungsvorgaben kollisionsfrei zu dem bzw. zu den Zielpunkten leiten. Dazu wird das zweite Orientierungsteilfeld beim Zusammensetzen der beiden Orientierungsteilfelder so gedreht, dass die Soll-Orientierung des darin definierten Übergabepunkts mit der Soll-Orientierung des im Basisfeld als Übergabepunkt festgelegten Lagepunkts übereinstimmt.

Die Wahl des Übergabepunkts im Basisfeld richtet sich im Wesentlichen nach der Lage des Eckpunkts des Parkplatzes, den das Fahrzeug 2 beim Einscheren in den Parkplatz passieren muss, der Lage des Startpunkts des Einparkvorgangs und den Abmessungen von Fahrzeug 2 sowie dessen Fahrgestells. Als Bezugspunkt für die Bestimmung der Fahrzeugposition wird vorzugsweise das Zentrum der Hinterachse gewählt. Andere Bezugspunkte sind möglich und lassen sich durch einfache Koordinatentransformation ineinander überführen. Von Interesse für die Festlegung des Übergabepunkts sind insbesondere die Länge und Breite des Fahrzeugs 2, dessen Achsabstand, die Breite der Hinterachse und der Überhang der Fahrzeugkarosserie über die Hinterachse.

Um auf Veränderungen des Einparkwegs flexibel reagieren zu können, werden im Basisfeld bevorzugt mehrere Übergabepunkte in Form eines Übergabefeldes definiert, die jeweils ein kollisionsfreies Einscheren ermöglichen. Ein Abweichen vom ursprünglich vorgesehenen Übergabepunkt, z.B. aufgrund einer Veränderung der Parklückenabmessungen, erfordert damit lediglich eine Verschiebung der beiden Orientierungsteilfelder relativ zueinander. Die Verschiebung kann durch eine Verschiebung des Basisfeldes, des zweiten Orientierungsteilfeldes oder durch Verschiebung beider bewirkt werden.

Das Ursprungs- oder Basisfeld wird aus einer Schar von Pfaden aufgebaut, deren gemeinsamer Ursprung dem Zielpunkt im Parkplatz entspricht und die von der seitlichen Begrenzung des Parkplatzes weg aus diesem herausführen. Das Erstellen der einzelnen Pfade berücksichtigt Vorgaben bezüglich der Pfadrichtungen am Zielpunkt und die maximal zulässige Pfadkrümmung. Die Pfade der Schar werden jeweils so erstellt, dass jeder Pfad die unter diesen Vorgaben minimale Pfadlänge aufweist. In der Figur 4 ist eine entsprechend erstellte Basisfeld-Pfadschar 30 dargestellt. Die auf den einzelnen Pfaden gelegenen Kreise geben die Lage möglicher Übergangspunkte an, auf die weiter unten noch im Einzelnen eingegangen wird. In Figur 5 ist der der Pfadschar von Figur 4 zugrunde gelegte Parkplatz 15 mit dem darin am Basisfeld-Ursprung 32 platzierten Basisfeld-Koordinatensystem 31 und dem Eckpunkt 33 des Parkplatzes dargestellt, um den das Fahrzeug 2 in den Parkplatz 15 einschert.

Zum Erstellen des Basisfelds werden auf jedem der Pfade einzelne Lagepunkte ausgewählt. Hierzu wird vorzugsweise ein den Basisfeldbereich abdeckendes Gitter erstellt. Die Pfade selbst werden mit ausreichend hoher Auflösung berechnet, so dass zu jedem gewählten Gitterpunkt ein Pfadpunkt vorhanden ist. Die Gitterpunkte können äquidistant, d.h. mit konstanten Abständen zwischen benachbarten Gitterpunkten, angeordnet sein. Um die Anzahl der Lagepunkte zu beschränken können die Gitterpunkte auch mit variierenden Abständen festgelegt werden. Vorzugsweise nimmt der Abstand zwischen zwei benachbarten Gitterpunkten mit dem Abstand der Gitterpunkte vom Ursprung der Pfadschar zu. Beispielsweise können die Abstände der Gitterpunkte mit dem Quadrat ihres Abstands vom Zielpunkt erhöht werden. Somit werden der Gitterabstand und damit auch der Interpolationsfehler umso geringer, je kürzer der Abstand zwischen dem Fahrzeug und dem Zielpunkt ist.

Jedem Lagepunkt wird der Winkel der Tangente an den Pfad in diesem Lagepunkt zugeordnet. Dieser Tangentenwinkel gibt die Richtung des Pfads an dem Lagepunkt an. Somit wird im Basisfeld jeder Pfad durch einen Vektor $(X,Y,Z)$ repräsentiert, der die Koordinaten der Lagepunkte $(x_i, y_i)$ und die Pfadrichtungen $(\theta_i)$ an den einzelnen Lagepunkten $i$ des Pfads enthält:

$$\begin{pmatrix} X \\ Y \\ Z \end{pmatrix} = \begin{bmatrix} x_1(s_1) & x_2(s_2) & \ldots & x_n(s_n) \\ y_1(s_1) & y_2(s_2) & \ldots & y_n(s_n) \\ \theta_1(s_1) & \theta_2(s_2) & \ldots & \theta_n(s_n) \end{bmatrix}$$

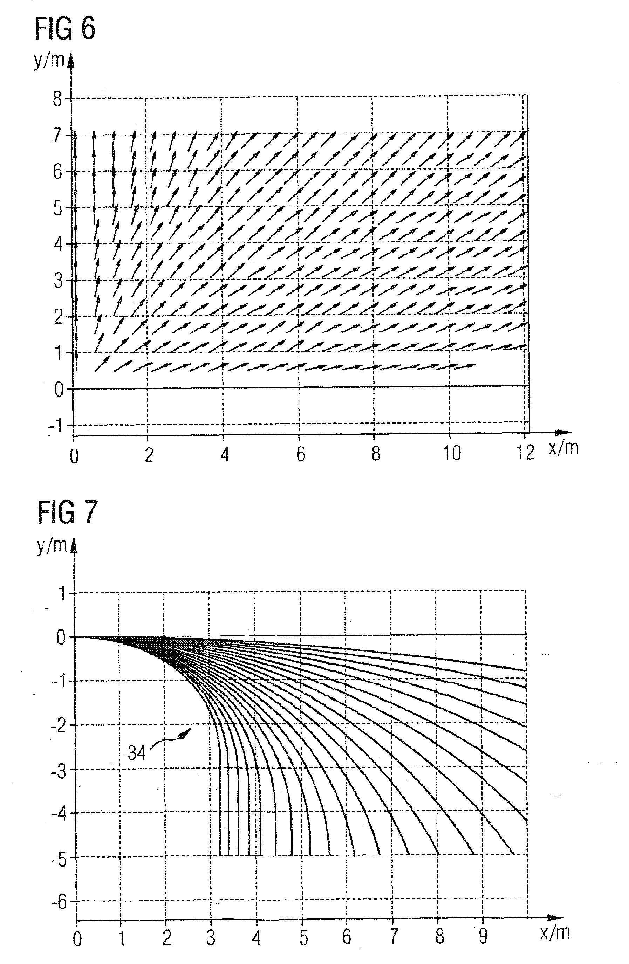

Hierin bedeutet $s_i$ den Abstand des jeweiligen Lagepunkts entlang des Pfads vom Zielpunkt der Pfade. Das Basisfeld selbst wird in Form einer Zuordnungstabelle erstellt, die die Vektordaten der einzelnen Pfade des Basisfelds enthält. Figur 6 zeigt in einer graphischen Veranschaulichung ein Beispiel von im Basisfeld definierten Soll-Orientierungen als Richtungsvektoren $\theta_i(s_i)$ am Ort der ihnen jeweils zugeordneten Lagepunkte $(x_i(s_i), y_i(s_i))$.

In ähnlicher Weise wird ein Feld der Übergabepunkte erstellt, wobei zu jedem Eckpunkt $(CP_{x,y,i})$ 33 des Parkplatzes 15 ein Eckpunkt mit den Koordinaten $(X_{vp,i}, Y_{vp,i})$ definiert ist:

$$\begin{pmatrix} X \\ Y \\ Z \end{pmatrix} = \begin{bmatrix} CP_{x,1} & CP_{x,2} & \dots & CP_{x,n} \\ CP_{y,1} & CP_{y,2} & \dots & CP_{y,n} \\ X_{vp,1} & X_{vp,2} & \dots & X_{vp,n} \end{bmatrix}$$

und

$$\begin{pmatrix} X \\ Y \\ Z \end{pmatrix} = \begin{bmatrix} CP_{x,1} & CP_{x,2} & \dots & CP_{x,n} \\ CP_{y,1} & CP_{y,2} & \dots & CP_{y,n} \\ Y_{vp,1} & Y_{vp,2} & \dots & Y_{vp,n} \end{bmatrix}$$

Auch dieses Feld wird in einer Zuordnungs- bzw. Nachschlagetabelle gespeichert. Die Zuordnungstabelle für die X-Koordinaten der Übergabepunkte $X_{vp}(CP_x, CP_y)$ ist nahezu unabhängig von $CP_y$. Um Speicherplatz zu sparen, wird diese Zuordnungstabelle durch eine affine Funktion unter Verwendung der Methode der kleinsten Fehlerquadrate angenähert. Diese Funktion kann in Form zweier Koeffizienten a und b abgespeichert werden. Die X-Koordinaten der Übergabepunkte ergeben sich daraus zu:

$$X_{vp}(CP_x, CP_y) \cong X_{vp}(CP_x) \cong a \cdot CP_x + b$$

Ein Beispiel eines Feldes von Übergabepunkten ist in der Figur 4 graphisch umgesetzt, worin die im Feld bestimmten Übergabepunkte den Pfaden des Basisfeldes in Form von Kreisen überlagert sind.

Das zweite Orientierungsteilfeld, im Folgenden auch als Übergabefeld bezeichnet, wird wie das Basisfeld aus einer Schar von Pfaden mit einem gemeinsamen Ursprung aufgebaut. Anders als im Basisfeld weisen jedoch alle Pfade im gemeinsamen Ursprung dieselbe Richtung $\theta_o = 0$ auf. Sie krümmen sich vom Ursprung aus nach rechts, so dass, wie der Figur 7 zu entnehmen, das Feld ausschließlich unterhalb der x-Achse definiert ist. Wie schon beim Basisfeld kann die Rastereinteilung ungleichmäßig sein, d.h. die Abstände der Lagepunkte auf den Pfaden können mit zunehmendem Pfadabstand und damit mit zunehmendem Abstand vom Ursprung (z.B. quadratisch) zunehmen. Befindet sich das Fahrzeug beim Einparken nicht genau auf einem der Lagepunkte, so diese wie die einzunehmende Soll-Orientierung aus den umgebenden Lagepunkten und den ihnen zugeordneten Soll-Orientierungen interpoliert werden.

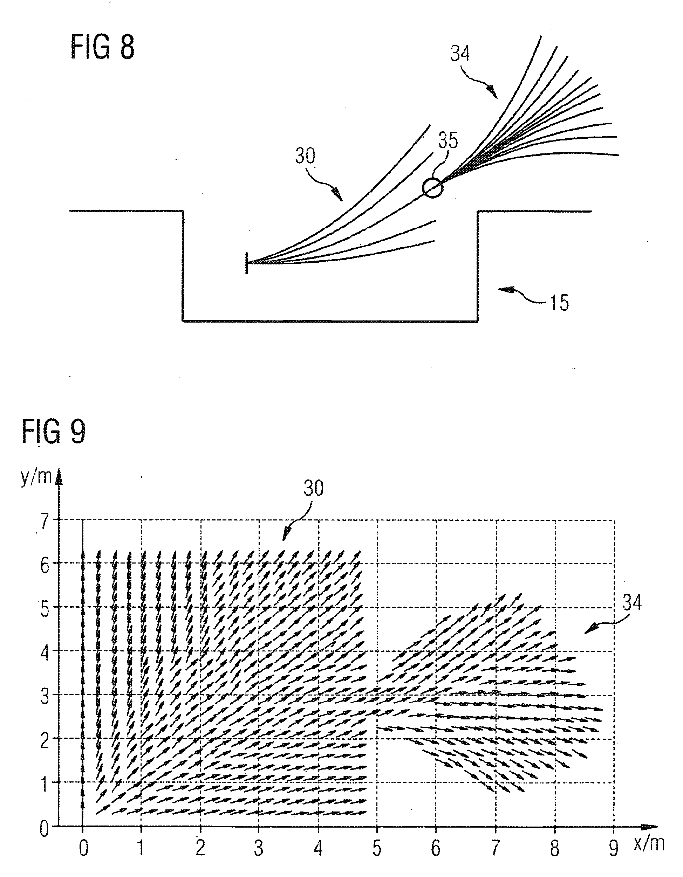

Das Orientierungsfeld wird aus den beiden Orientierungsteilfeldern, nämlich dem Basisfeld und dem Übergabefeld zusammengesetzt. Hierzu wird der zum dem aktuellen Eckpunkt 33 des Parkplatzes gehörende Übergabepunkt bestimmt und mit dem gemeinsamen Ursprung des Übergabefelds verbunden. Anschließend wird das Übergabefeld so um den ausgewählten Übergabepunkt gedreht, dass die Steigung der Pfade des Übergabefeldes der Soll-Orientierung des Übergabepunkts im Basisfeld entspricht. Somit ist, wie der Darstellung der entsprechend verknüpften Pfadschar 30 des Basisfeldes mit der Pfadschar 34 am Übergabepunkt 35 in Figur 8 entnommen werden kann, ein stetiger Übergang des Fahrzeugs von einem Pfad des Übergangsfeldes in einen Pfad des Basis- bzw. Ursprungsfeldes ohne plötzliche Richtungsänderung möglich. Figur 9 zeigt die Soll-Orientierungen des wie in Figur 8 aus dem Basis- und dem Übergabefeld zusammengefügten Orientierungsfeldes als Richtungsvektoren am Ort der zugehörigen Lagepunkte.

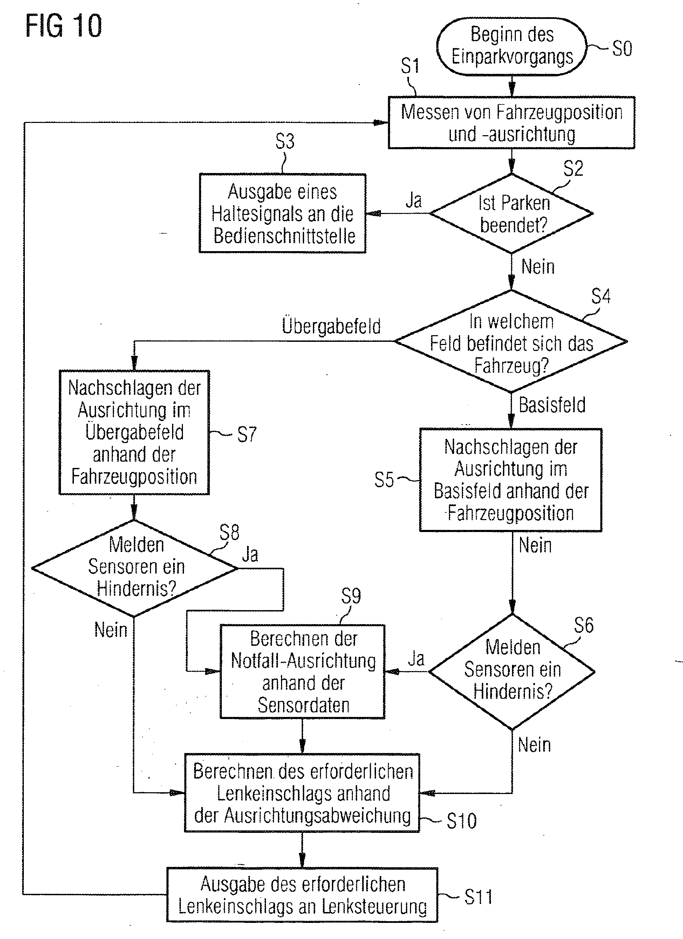

In Figur 10 sind in einem Flussdiagramm die wesentlichen vom Einparkassistenten ausgeführten Verfahrensschritte zur Unterstützung des Fahrzeugführers beim Einparkvorgang dargestellt. Der Einparkvorgang beginnt in Schritt S0, z.B. mit dem Einlegen des Rückwärtsgangs. Zuvor wurde bereits nach Mitteilung der Parkabsicht durch den Fahrzeugführer die Parklücke mittels der Sensoreinrichtung 24 vermessen, das Basis- und das Übergabefeld erstellt, und der Übergabepunkt bestimmt. Nach dem Beginn des Einparkvorgangs in Schritt S0 werden in Schritt S1 zunächst die Fahrzeugposition und Fahrzeugausrichtung, beispielsweise mit einer odometrischen Einrichtung, gemessen. Wird im nachfolgenden Schritt S2 festgestellt, dass der Einparkvorgang bereits beendet ist, so wird über die Bedienschnittstelle in Schritt S3 ein Haltesignal an den Fahrzeugführer ausgegeben.

Ist der Parkvorgang jedoch noch nicht beendet, so wird in Schritt S4 geprüft, ob sich das Fahrzeug 2 im Basisfeld oder im Übergabefeld befindet. Geben die Daten der Fahrzeugpositionsbestimmung eine Lage im Basisfeld an, so wird die der aktuellen Position zugeordnete Soll-Orientierung in Schritt S5 aus der Zuordnungstabelle für das Basisfeld ausgelesen. Befindet sich das Fahrzeug 2 jedoch im Übergabefeld, so wird die der aktuellen Position zugeordnete Soll-Orientierung stattdessen in Schritt S7 aus der Zuordnungstabelle für das Übergabefeld ausgelesen.

Je nachdem in welchem Orientierungsteilfeld sich das Fahrzeug 2 befindet, wird entweder in Schritt S6 oder in Schritt S8 geprüft, ob sich über die Sensoreinrichtung 24 ein Hindernis im eingeschlagenen Einparkpfad feststellen lässt. Ist dies der Fall, dann wird in Schritt S9 anhand der Sensordaten eine neue 'Notfall'-Ausrichtung, d.h. eine das Hindernis umgehende Ersatzausrichtung berechnet. Andernfalls, wie auch nach Berechnung der Ersatzausrichtung, wird in Schritt S10 der erforderliche Lenkeinschlag anhand der Abweichung der Fahrzeugausrichtung von der Soll-Orientierung bzw. der 'Notfall'-Ausrichtung berechnet. Der berechnete Lenkeinschlag wird in Schritt S11 an die Lenksteuerung 26 ausgegeben. Anschließend fährt das Verfahren mit der Messung von Fahrzeugposition und -ausrichtung in Schritt S1 fort.

Das beschriebene Verfahren, das von dem Einparkassistenten 20 und darin im Wesentlichen von der vorzugsweise programmtechnisch eingerichteten Parkweg-Leiteinrichtung 21 ausgeführt wird, ermöglicht eine große Flexibilität in der 'Wahl' des Einparkwegs. Mittels der Überwachung der Fahrzeugumgebung durch die Sensoreinrichtung 24 kann die Befahrbarkeit des zunächst verfolgten Einparkwegs ständig überprüft werden. Würde dies zu einer Kollision führen, so wird zunächst ein Ausweichkurs bestimmt und anschließend wird das Fahrzeug anhand der Soll-Orientierungsfelder einen neuen Einparkweg entlang zum Zielpunkt geführt. Die Umgehung kann dabei durch ein Neuzusammenfügen des ersten und zweiten Orientierungsteilfeldes mit einem neuen Übergabepunkt erfolgen, wobei das Fahrzeug einem Pfad des Übergabefeldes folgt, dessen Richtung am Ort des Fahrzeugs der 'Notfall'-Ausrichtung entspricht.

Gerade bei engen, d.h. kleinen Parklücken, kann das Fahrzeug 2 im Allgemeinen nicht in einem Zug in eine korrekte Parkstellung gebracht werden. Daher wird der Parkvorgang meist in mehreren, möglichst wenigen Stufen durchgeführt. In der ersten Stufe fährt das Fahrzeug soweit wie möglich in den Parkplatz ein, der in der Lücke verfügbar ist. Im Zweiten und eventuell weiteren nachfolgenden Schritten rangiert es innerhalb des Parkplatzes bis seine Längsachse in etwa parallel zur seitlichen Begrenzung des Parkplatzes steht. Dies sei anhand der folgenden Figuren veranschaulicht.

Die Parkwegleiteinrichtung (21) und weitere Komponenten des des Einparkassistenten 20 sind bevorzugt als datenverarbeitende Einrichtung ausgebildet, auf der ein zur Ausführung des beschriebenen Verfahrens geeigneter Programmkode ausgeführt wird. Die Ausführung des Programmkodes führt dabei zur Einrichtung der beschriebenen Komponenten der Parkwegleiteinrichtung (21) und zur Vervollständigung der anderen Einrichtungen des Einparkassistenten 20. Der Programmkode kann selbstständig in Form eines Computerprogrammprodukts verfügbar sein. Insbesondere kann das Computerprogrammprodukt die Form eines Datenträgers oder einer Speichereinrichtung annehmen, die den Programmcode in Form verschiedener unterscheidbarer Zustände enthalten, die von einer datenverarbeitenden Einrichtung gelesen und als Programmanweisungen ausgeführt werden können. Als Computerprogrammprodukt werden darüber hinaus alle Medien angesehen, die bestimmte Zustände enthalten oder übertragen können, beispielsweise Internetverbindungen zu Knoten, über die der Programmcode von einer Datenverarbeitungsanlage eingelesen werden kann.

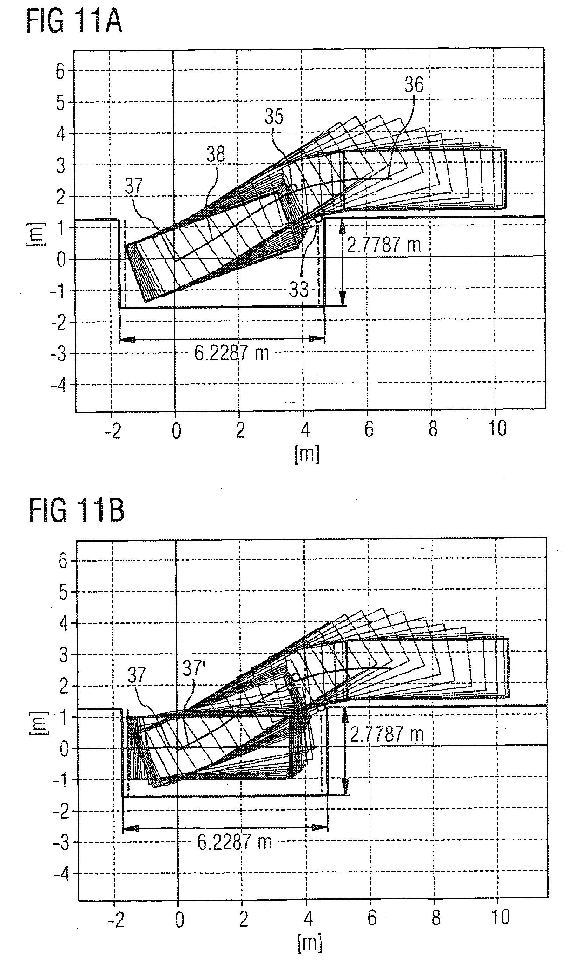

Figur 11 zeigt einen üblichen zweistufigen Einparkvorgang in eine Parklücke. In der Abbildung a) sind der Eckpunkt 33 der Parklücke und der Übergabepunkt 35 zwischen Übergabefeld und Basisfeld markiert. In beiden Abbildungen sind die Zwischenstationen des Einparkvorgangs unterlegt. In der ersten, in Figur 11a dargestellten, Stufe fährt das Fahrzeug 2 von der Startposition 36 zum Zielpunkt 37. Im zweiten, in Figur 11b gezeigten, Schritt folgt das Fahrzeug 2 den Soll-Orientierungen eines anderen Pfads, der seine Längsachse in etwa parallel zur seitlichen Begrenzung des Parkplatzes führt und das Fahrzeug 2 am Endpunkt 37' gerade stellt.

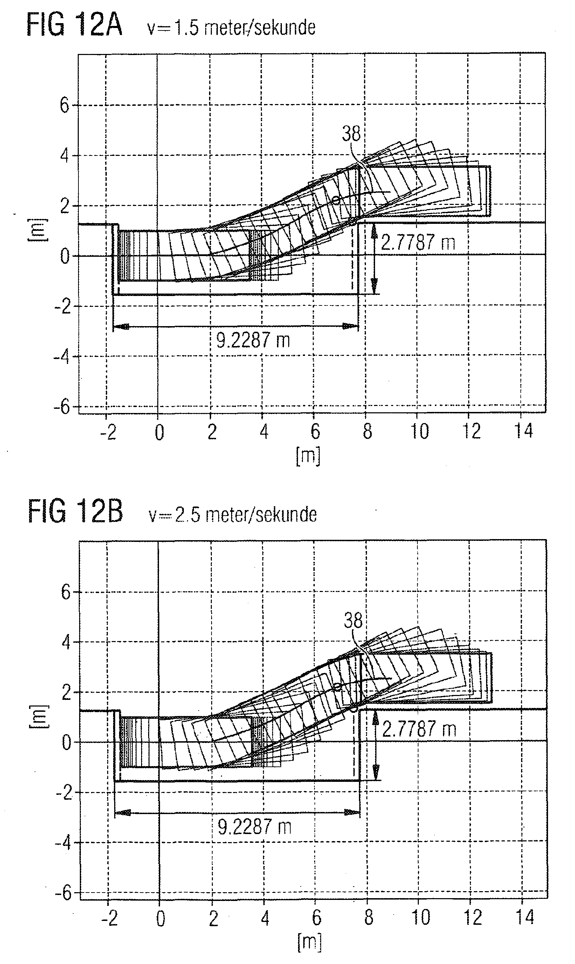

In den Darstellungen der Figur 12 ist ein Vergleich des Einparkwegs bei zwei verschiedenen Fahrzuggeschwindigkeiten vorgestellt. In Figur 12a parkt das Fahrzeug mit einer Geschwindigkeit von 1,5 Metern pro Sekunde ein. Es nähert sich während seiner Annäherung an den Zielpunkt 36 in etwa asymptotisch an die Geradestellung in dem Parkplatz, d.h. an die Soll-Orientierung θ = 0, an. Im zweiten, in der Figur 12b dargestellten Fall, beträgt die Fahrzeuggeschwindigkeit 2,5 Meter pro Sekunde. Hier folgt das Fahrzeug einem anderen Einparkweg, der es zunächst über die durch θ = 0 gekennzeichnete Geradestellung hinaus und anschließend wieder in etwa in diese zurückführt. Der Einparkweg beschreibt "schwingt" sozusagen über die Geradestellung hinaus, wobei der Abstand zur seitlichen Begrenzung der Parklücke, beispielsweise zum Bordstein, mitberücksichtigt wird.

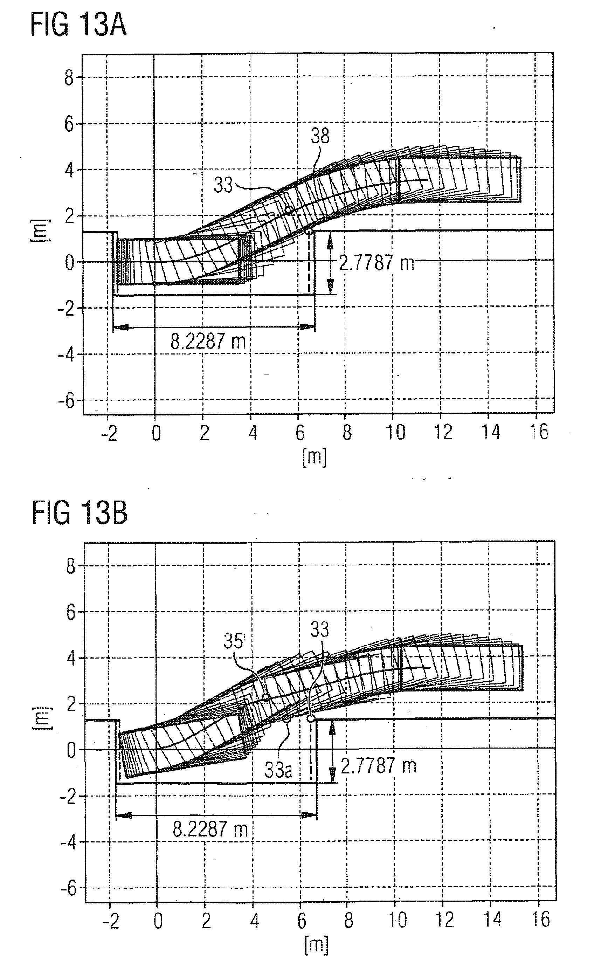

Der oben beschriebene Einparkassistent 20 ermöglicht jedoch nicht nur die Handhabung enger Parklücken und unterschiedlicher Fahrzeuggeschwindigkeiten, sondern kann auch auf Veränderungen in der Umgebung des einparkenden Fahrzeugs 2 reagieren. In den Abbildungen der Figur 13 ist die Reaktion des Einparkassistenten 20 auf eine Verschiebung des Eckpunkts 33 der Parklücke veranschaulicht. Dies tritt zum Beispiel dann auf, wenn das die Parklücke nach vorne begrenzende Fahrzeug während des Einparkvorgangs von Fahrzeug 2 plötzlich etwas zurückstößt. Figur 13a zeigt zum Vergleich den Einparkvorgang, wie er sich bei unveränderlicher Parklückenabmessung ergeben würde. Figur 13b zeigt den an die Verschiebung des Eckpunkts 33 an die neue Position 33a angepassten Einparkweg 38. Diese Verschiebung des Eckpunkts 33 wird mittels der Sensoreinrichtung 24, vornehmlich mit den nach hinten und rechts, des Fahrzeugs 2 ausgerichteten Sensoren erkannt. Der neu platzierte Eckpunkt wird von der Parkweg-Leiteinrichtung 21 als Hindernis erkannt, das kollisionsfrei umfahren werden muss. Entsprechend wird aus dem Feld der Übergabepunkte ein neuer Übergabepunkt 35' bestimmt und das Übergabefeld an diesem neuen Übergabepunkt mit dem Basisfeld verknüpft. Im Endeffekt führt dies zu einer Begradigung des Einparkwegs 38, bis ein Einscheren in die Parklücke um den neuen Eckpunkt möglich ist. Dann folgt das Fahrzeug 2 den Soll-Orientierungen des Basisfeldes zum Zielpunkt 37.

Rückt das die Parklücke nach hinten begrenzende Fahrzeug in die Parklücke vor, so werden der Zielpunkt des Basisfeldes und damit das Basisfeld selbst nach vorne verschoben. Da sich der Parkplatz hierdurch im Endeffekt nur verkürzt, entspricht dieser Fall im Wesentlichen dem oben beschriebenen Fall einer Versetzung des Eckpunkts 33.

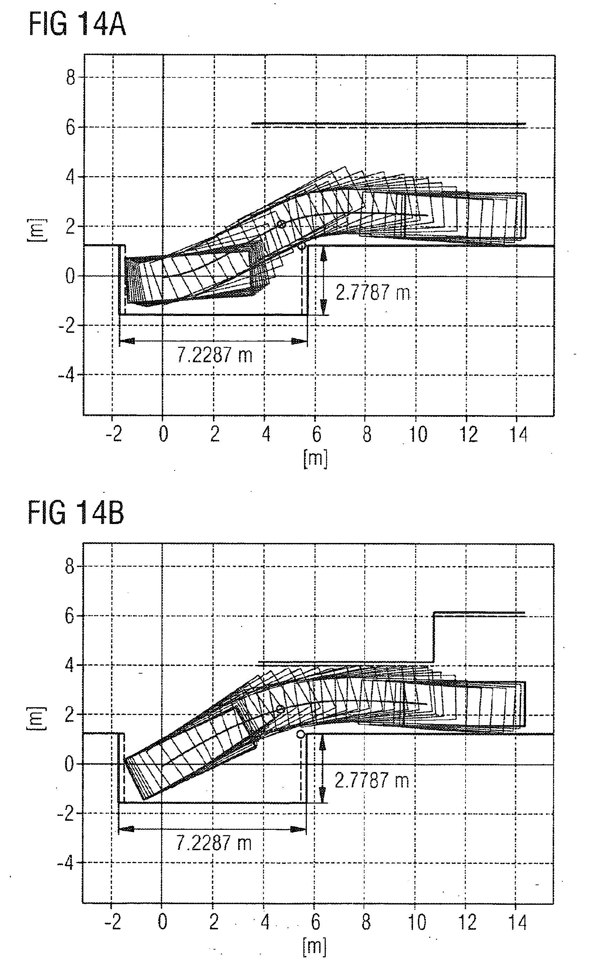

In der Figur 14 ist die Reaktion des Einparkassistenten 20 auf eine Veränderung des Ausschwenkraums dargestellt. Figur 14a zeigt den Einparkvorgang, wie er bei genügend großem Ausschwenkraum stattfinden würde. Stellt der Einparkassistent 20 jedoch mithilfe der Sensoreinrichtung eine plötzlich Begrenzung des Ausschwenkraums fest, beispielsweise weil ein Lieferfahrzeug neben dem einparkenden Fahrzeug in zweiter Reihe parkt, so kann das Fahrzeug 2 den ursprünglich vorgegebenen Soll-Orientierungen nicht mehr folgen, wenn eine Kollision vermieden werden soll. Daher bewegt es sich nach Erkennen des Hindernisses, wie in Figur 14b vorgestellt, auf einer wie oben beschriebenen 'Notfall'-Ausrichtung quer zu den Pfaden der Pfadschar des vor Beginn des Parkvorgangs erstellten Orientierungsfeldes und nimmt die Vorgaben des Orientierungsfeldes erst dann wieder auf, wenn die darin vorgegebenen Soll-Orientierungen ein kollisionsfreies Aus- bzw. Einschwenken gestatten. Diese 'Notfall'-Ausrichtung kann z.B. durch eine Neuerstellung der Anbindung des Übergabefeldes an das Basisfeld erfolgen.

Der oben beschriebene Einparkassistent gibt statt einem Sollpfad für den Einparkweg ein Feld von lokal definierten Soll-Orientierungen vor, die jeweils die Richtung eines zum Zielpunkt führenden Pfades an der jeweiligen Stelle angeben. Ein Abweichen von diesem Pfad, beispielsweise aufgrund einer erhöhten Fahrzeuggeschwindigkeit oder wegen der Notwendigkeit des Umfahrens eines Hindernisses, führt stets zu einem alternativen Pfad, entlang dessen das Fahrzeug anhand der vorgegebenen Soll-Orientierungen wieder zum Zielpunkt gelangt. Die Steuerung des Lenkeinschlags beschränkt sich auf eine Korrektur der Fahrzeugausrichtung gemäß der für den jeweiligen Lagepunkt definierten Soll-Orientierung und gewährleistet so eine sichere Hinführung des Fahrzeugs zum Zielpunkt. Mit der Erfindung entfällt nicht nur eine komplexe Rückführung des Fahrzeugs auf einen während des Einparkvorgangs verlassenen Sollweg, sondern es kann auch flexibel auf Veränderungen in der Parksituation, wie z.B. einer Veränderung der Fahrzeuggeschwindigkeit, einer Veränderung der Größe der Parklücke, einer Begrenzung des Ausschwenkraums oder dergleichen mehr reagiert werden.

## Patentansprüche

1. Verfahren zum Steuern der Lenkung eines Fahrzeugs während eines Einparkvorgangs mit Schritten zum

   - Vermessen des zum Einparken des Fahrzeugs (2) gewählten Parkplatzes (15),
   - Erstellen eines Orientierungsfeldes, das eine Anzahl von Lagepunkten innerhalb des gewählten Parkplatzes (15) und im Umfeld des gewählten Parkplatzes (15) bestimmt und jedem Lagepunkt jeweils eine Soll-Orientierung zuordnet,
   - Bestimmen der Position und Ausrichtung des einzuparkenden Fahrzeugs (S1) relativ zu den Lagepunkten des Orientierungsfeldes und
   - Steuern des Lenkeinschlags (S10) des Fahrzeugs so, dass die Ausrichtung des Fahrzeugs an einem Lagepunkt im Wesentlichen die in dem Orientierungsfeld diesem Lagepunkt zugeordnete Soll-Orientierung einnimmt,

   wobei das Orientierungsfeld aus einem ersten Orientierungsteilfeld und einem zweiten Orientierungsteilfeld aufgebaut wird, wobei das erste Orientierungsteilfeld die dem Parkplatz (15) zugeordneten Soll-Orientierungen und das zweite Orientierungsteilfeld die einem Eckpunkt (33) des Parkplatzes (15) zugeordneten Soll-Orientierungen umfasst, und wobei alle über die Soll-Orientierungen der Lagepunkte des zweiten Orientierungsteilfeldes definierten Einparkwegabschnitte (34) in einem gemeinsamen Lagepunkt enden, **dadurch gekennzeichnet, dass** das zweite Orientierungsteilfeld so mit dem ersten Orientierungsteilfeld verbunden wird, dass die Lage des gemeinsamen Lagepunkts der Einparkwegabschnitte des zweiten Orientierungsteilfelds mit der Lage eines Lagepunkts (35) des ersten Orientierungsteilfelds übereinstimmt, dessen Entfernung von dem Eckpunkt des Parkplatzes ausreichend groß ist, damit das an diesem Lagepunkt befindliche Fahrzeug bei der an diesem Lagepunkt vorgegebenen Soll-Orientierung den Eckpunkt (33) des Parkplatzes (15) nicht berührt.

**2.** Verfahren nach Anspruch 1, **dadurch gekennzeichnet, dass** einer der Lagepunkte aus der Anzahl von Lagepunkten den Zielpunkt (37) eines Einparkwegs (38) des Fahrzeugs (2) bildet.

**3.** Verfahren nach Anspruch 2, **dadurch gekennzeichnet, dass** die einem Lagepunkt zugeordnete Soll-Orientierung der Ausrichtung der Tangente an einen durch den Lagepunkt führenden Einparkweg (38) entspricht.

**4.** Verfahren nach Anspruch 2 oder 3, **dadurch gekennzeichnet, dass** alle über die Soll-Orientierungen der Lagepunkte definierten Einparkwege (38) denselben Zielpunkt aufweisen.

**5.** Verfahren nach einem der Ansprüche 1 bis 4, **dadurch gekennzeichnet, dass** das zweite Orientierungsteilfeld beim Verbinden mit dem ersten Orientierungsteilfeld so gedreht wird, dass die Soll-Orientierung des gemeinsamen Lagepunkts des zweiten Orientierungsteilfeldes mit der Soll-Orientierung des Lagepunkts (35) des ersten Orientierungsteilfeldes übereinstimmt, mit dessen Lage der gemeinsame Lagepunkt in Übereinstimmung gebracht wird.

**6.** Verfahren nach einem der vorangehenden Ansprüche, **dadurch gekennzeichnet, dass** das Steuern des Lenkeinschlags des an einem Lagepunkt des Orientierungsfeldes befindlichen Fahrzeugs (2) auf der Grundlage der Abweichung zwischen der an diesem Lagepunkt von dem Fahrzeug eingenommenen Ist-Orientierung und der für diesen Lagepunkt vorgegebenen Soll-Orientierung erfolgt.

**7.** Verfahren nach einem der vorangehenden Ansprüche, **dadurch gekennzeichnet, dass**, sobald erkannt wird, dass bei Befolgen der Soll-Orientierungen des Orientierungsfeldes eine Kollisionsgefahr mit einem Hindernis besteht, das Fahrzeug (2) solange entlang einer um das Hindernis (33a) führenden Ausrichtung geleitet wird, bis die Kollisionsgefahr nicht mehr besteht.

**8.** Verfahren nach Anspruch 7, **dadurch gekennzeichnet, dass** der für die um das Hindernis führende Ausrichtung erforderliche Lenkeinschlag aus dem mit der Sensoreinrichtung bestimmten Abstand nach einer Regelvorgabe berechnet wird, die einen einzuhaltenden Mindestabstand des Fahrzeugs zum Hindernis berücksichtigt.

**9.** Verfahren nach Anspruch 7 oder 8, **dadurch gekennzeichnet, dass** die um das Hindernis (33a) führende Ausrichtung durch ein Neuerstellen des Orientierungsfeldes mittels einer Verschiebung des gemeinsamen Lagepunkts des zweiten Orientierungsteilfeldes an einen weiteren Lagepunkt (35') des ersten Orientierungsteilfeldes erfolgt, dessen Abstand zu dem Hindernis (33a) und dessen Soll-Orientierung geeignet ist, damit das an diesem weiteren Lagepunkt befindliche Fahrzeug bei der an diesem Lagepunkt vorgegebenen Soll-Orientierung das Hindernis (33a) nicht berührt.

**10.** Verfahren nach Anspruch 7, 8 oder 9, **dadurch gekennzeichnet, dass** die um das Hindernis (33a) führende Ausrichtung parallel zur seitlichen Begrenzung des Parkplatzes (15) verläuft.

**11.** Verfahren nach einem der Ansprüche 7 bis 10, **dadurch gekennzeichnet, dass** der Zielpunkt (37) der dem Orientierungsfeld zugrunde liegenden Einparkwege verschoben wird.

**12.** Vorrichtung zum Steuern der Lenkung eines Fahrzeugs während eines Einparkvorgangs mit:

- einer Sensoreinrichtung (24), die zum Vermessen eines Parkplatzes (15) und zum Erkennen eines Hindernisses (33a) ausgebildet ist,
- einer Fahrzeuglage-Bestimmungseinrichtung (25), die zumindest zur Bestimmung der Fahrzeugposition und der Fahrzeugausrichtung ausgebildet ist,
- einer Gangwahl-Erkennungseinrichtung (23), die zur Ausgabe eines den aktuell eingelegten Gang des Fahrzeugs (2) repräsentierenden Signals ausgebildet ist,
- einer Bedienschnittstelle (22) für die Eingabe von Anweisungen des Fahrzeugführers und/oder für die Ausgabe von Informationen an den Fahrzeugführer,
- einer elektromechanischen Steuereinrichtung (26) zur Steuerung des Lenkeinschlags des Fahrzeugs und
- einer Parkweg-Leiteinrichtung (21) zur Berechnung der von der elektromechanischen Steuereinrichtung zur Führung des Fahrzeugs entlang eines Einparkwegs einzustellenden Lenkeinschläge,

wobei die Parkweg-Leiteinrichtung (21) aufweist:

- eine Parkplatz-Bestimmungseinrichtung, die im Zusammenwirken mit der Sensoreinrichtung (24) zur Ermittlung der Geometrie des zum Einparken des Fahrzeugs gewählten Parkplatzes (15) und von Hindernissen (33a) im Umfeld des Fahrzeugs (2) ausgebildet ist,

- eine Orientierungsfeld-Erstellungseinrichtung, die zum Erstellen eines Orientierungsfeldes ausgebildet ist, das eine Anzahl von Lagepunkten innerhalb des gewählten Parkplatzes (15) und im Umfeld des gewählten Parkplatzes bestimmt und jedem Lagepunkt jeweils eine Soll-Orientierung zuordnet, wobei das Orientierungsfeld aus einem ersten Orientierungsteilfeld und einem zweiten Orientierungsteilfeld aufgebaut wird, wobei das erste Orientierungsteilfeld die dem Parkplatz (15) zugeordneten Soll-Orientierungen und das zweite Orientierungsteilfeld die einem Eckpunkt (33) des Parkplatzes (15) zugeordneten Soll-Orientierungen umfasst, wobei alle über die Soll-Orientierungen der Lagepunkte des zweiten Orientierungsteilfeldes definierten Einparkwegabschnitte (34) in einem gemeinsamen Lagepunkt enden, und wobei das zweite Orientierungsteilfeld so mit dem ersten Orientierungsteilfeld verbunden wird, dass die Lage des gemeinsamen Lagepunkts der Einparkwegabschrtitte des zweiten Orientierungsteilfelds mit der Lage eines Lagepunkts (35) des ersten Orientierungsteilfelds übereinstimmt, dessen Entfernung von dem Eckpunkt des Parkplatzes ausreichend groß ist, damit das an diesem Lagepunkt befindliche Fahrzeug bei der an diesem Lagepunkt vorgegebenen Soll-Orientierung den Eckpunkt (33) des Parkplatzes (15) nicht berührt,

- eine Ausrichtungsabweichungseinrichtung, die zur Bestimmung der Abweichung der aktuellen Fahrzeugausrichtung an einem Lagepunkt von der für diesen Lagepunkt von dem Orientierungsfeld vorgegebenen Soll-Orientierung ausgebildet ist, und

- eine Lenkeinschlagsvorgabe-Einrichtung, die zur Berechnung einer Lenkeinschlagsvorgabe für die elektromechanische Steuereinrichtung (26) auf der Grundlage der Ausrichtungsabweichung des Fahrzeugs (2) von der Soll-Orientierung und zum Weiterleiten der Lenkeinschlagsvorgabe an die elektromechanische Steuereinrichtung (26) ausgebildet ist.

13. Vorrichtung nach Anspruch 12, **dadurch gekennzeichnet, dass** die Fahrzeuglage-Bestimmungseinrichtung zur Bestimmung der Fahrzeugposition und der Fahrzeugausrichtung auf der Grundlage der Messung der Bewegung von wenigstens einem Rad des Fahrzeugs (2) ausgebildet ist.

14. Vorrichtung nach Anspruch 12 oder 13, **dadurch gekennzeichnet, dass** die Parkweg-Leiteinrichtung (21) zur Ausführung eines Verfahrens nach einem der Ansprüche 1 bis 11 ausgebildet ist
und/oder dass die Parkweg-Leiteinrichtung (21) eine Datenverarbeitungseinrichtung umfasst.

15. Computerprogrammprodukt zum Steuern der Lenkung eines Fahrzeugs während eines Einparkvorgangs, wobei das Computerprogrammprodukt eine Reihe physikalisch unterscheidbarer Zustände aufweist, die durch eine Datenverarbeitungseinrichtung lesbar und ausführbar sind und die eine Abfolge von Instruktionen darstellen, die auf der Datenverarbeitungseinrichtung ausgeführt ein Verfahren nach einem der Ansprüche 1 bis 11 durchführen.

**Claims**

1. Method for controlling the steering of a vehicle during a parking operation involving steps for:

- measuring the parking space (15) selected for parking the vehicle (2),
- producing an orientation field which determines a number of position points within the selected parking space (15) and in the region surrounding the selected parking space (15) and associates a desired orientation with each position point, respectively,
- determining the position and orientation of the vehicle (S1) to be parked relative to the position points of the orientation field and
- controlling the steering angle (S10) of the vehicle in such a manner that the orientation of the vehicle at a position point substantially assumes the desired orientation associated with this position point in the orientation field, the orientation field being constructed from a first orientation part-field and a second orientation part-field, the first orientation part-field comprising the desired orientations associated with the parking space (15) and the second orientation part-field comprising the desired orientations associated with a corner (33) of the parking space (15) and all the parking path portions (34) defined via the desired orientations of the position points of the second orientation part-field terminating in a common position point, **characterised in that** the second orientation part-field is connected to the first orientation part-field in such a manner that the position of the common position point of the parking path portions of the second orientation part-field corresponds to the position of a position point (35) of the first orientation part-field whose distance from the corner of the parking space is sufficiently great for the vehicle located at this position point not to come into contact with the corner (33) of the parking space (15) in the desired orientation predetermined at this position point.

2. Method according to claim 1, **characterised in that** one of the position points from the number of position points forms the destination (37) of a parking path (38) of the vehicle (2).

3. Method according to claim 2, **characterised in that** the desired orientation associated with a position point corresponds to the orientation of the tangent at a parking path (38) which extends through the position point.

4. Method according to claim 2 or claim 3, **characterised in that** all the parking paths (38) defined by the desired orientations of the position points have the same destination.

5. Method according to any one of claims 1 to 4, **characterised in that** the second orientation part-field, when being connected to the first orientation part-field, is rotated in such a manner that the desired orientation of the common position point of the second orientation part-field corresponds to the desired orientation of the position point (35) of the first orientation part-field, with whose position the common position point is brought into correspondence.

6. Method according to any one of the preceding claims, **characterised in that** the control of the steering angle of the vehicle (2) which is located at a position point of the orientation field is carried out on the basis of the deviation between the actual orientation assumed at this position point by the vehicle and the desired orientation predetermined for this position point.

7. Method according to any one of the preceding claims, **characterised in that**, as soon as it is identified that there is a risk of collision with an obstacle when following the desired orientations of the orientation field, the vehicle (2) is directed along an orientation which extends around the obstacle (33a) until there is no further risk of collision.

8. Method according to claim 7, **characterised in that** the steering angle required for the orientation which extends around the obstacle is calculated from the spacing which is determined with the sensor device according to a rule which takes into account a minimum spacing of the vehicle that has to be maintained with respect to the obstacle.

9. Method according to claim 7 or 8, **characterised in that** the orientation which extends around the obstacle (33a) is carried out by resetting the orientation field by means of a displacement of the common position point of the second orientation part-field to another position point (35') of the first orientation part-field whose spacing with respect to the obstacle (33a) and whose desired orientation is suitable for the vehicle which is located at this other position point not to come into contact with the obstacle (33a) in the desired orientation predetermined at this position point.

10. Method according to claim 7, 8 or 9, **characterised in that** the orientation which extends around the obstacle (33a) extends parallel with the lateral delimitation of the parking space (15).

11. Method according to any one of claims 7 to 10, **characterised in that** the destination (37) of the parking paths on which the orientation field is based is displaced.

12. Device for controlling the steering of a vehicle during a parking operation having:

- a sensor device (24) which is constructed for measuring a parking space (15) and for identifying an obstacle (33a),
- a vehicle location determination device (25) which is constructed at least for determining the vehicle position and the vehicle orientation,
- a gear selection identification device (23), which is constructed to emit a signal which represents the currently selected gear of the vehicle (2),
- an operator interface (22) for inputting instructions of the vehicle driver and/or for outputting information to the vehicle driver,
- an electromechanical control device (26) for controlling the steering angle of the vehicle, and
- a parking path direction device (21) for calculating the steering angles to be adjusted by the electromechanical control device to guide the vehicle along a parking path,

the parking path direction device (21) having:

- a parking space determination device which, together with the sensor device (24), is constructed to establish the geometry of the parking space (15) selected to park the vehicle and obstacles (33a) in the region surrounding the vehicle (2),

- an orientation field production device which is constructed to produce an orientation field which determines a number of position points within the selected parking space (15) and in the region surrounding the selected parking space and associates a desired orientation with each position point, respectively, the orientation field being constructed from a first orientation part-field and a second orientation part-field, the first orientation part-field comprising the desired orientations which are associated with the parking space (15) and the second orientation part-field comprising the desired orientations which are associated with a corner (33) of the parking space (15), all the parking path portions (34) which are defined by means of the desired orientations of the position points of the second orientation part-field terminating in a common position point and the second orientation part-field being connected to the first orientation part-field in such a manner that the location of the common position point of the parking path portions of the second orientation part-field corresponds to the location of a position point (35) of the first orientation part-field, whose distance from the corner of the parking space is sufficiently great for the vehicle which is located at this position point not to come into contact with the corner (33) of the parking space (15) in the desired orientation predetermined at this position point,

- an orientation deviation device which is constructed to determine the deviation of the current vehicle orientation at a position point of the desired orientation which is predetermined for that position point of the orientation field, and

- a steering angle instruction device which is constructed to calculate a steering angle instruction for the electromechanical control device (26) on the basis of the orientation deviation of the vehicle (2) from the desired orientation and to further transmit the steering angle instruction to the electromechanical control device (26).

**13.** Device according to claim 12, **characterised in that** the vehicle position determination device is constructed to determine the vehicle position and the vehicle orientation on the basis of the measurement of the movement of at least one wheel of the vehicle (2).

**14.** Device according to claim 12 or claim 13, **characterised in that** the parking path direction device (21) is constructed to carry out a method according to any one of claims 1 to 11, and/or **in that** the parking path direction device (21) comprises a data processing device.

**15.** Computer program product for controlling the steering of a vehicle during a parking operation, the computer program product having a series of physically distinguishable states which can be read and carried out by means of a data processing device and which represent a series of instructions which, when implemented on the data processing device, carry out a method according to any one of claims 1 to 11.

**Revendications**

**1.** Procédé pour commander la conduite d'un véhicule pendant d'une manoeuvre de stationnement, comprenant les étapes consistant à :

- mesurer la place de parking (15) sélectionnée pour garer le véhicule (2) ;
- établir un champ d'orientation déterminant un certain nombre d'emplacements à l'intérieur de la place de parking (15) sélectionnée et autour de la place de parking (15) sélectionnée et attribuant à chaque emplacement respectivement une orientation théorique ;
- déterminer la position et l'alignement du véhicule (S1) à garer par rapport aux emplacements du champ d'orientation ; et
- commander le braquage (S10) du véhicule de sorte que l'alignement du véhicule à un certain emplacement occupe substantiellement l'orientation théorique attribuée à cet emplacement dans le champ d'orientation,

dans lequel le champ d'orientation se compose d'un premier champ d'orientation partiel et d'un deuxième champ d'orientation partiel, le premier champ d'orientation partiel comprenant les orientations théoriques attribuées à la place de parking (15) et le deuxième champ d'orientation partiel comprenant les orientations théoriques attribuées à un point angulaire (33) de la place de parking (15), et dans lequel toutes les sections (34) de la trajectoire de stationnement, définies par le deuxième champ d'orientation partiel, se terminent par un emplacement commun, **caractérisé en ce que** le deuxième champ d'orientation partiel est relié au premier champ d'orientation partiel de telle sorte que la situation de l'emplacement commun des sections de trajectoire de stationnement du deuxième champ d'orientation partiel correspond à la situation d'un emplacement (35) du premier champ d'orientation partiel dont la distance par rapport au point angulaire de la place de parking est suffisante pour que le véhicule se trouvant à cet emplacement n'entre pas en contact avec le point angulaire (33) de la place de parking (15) sous l'orientation théorique spécifiée à cet emplacement.

2.  Procédé selon la revendication 1, **caractérisé en ce que** l'un des emplacements parmi le nombre d'emplacements constitue le point visé (37) par une trajectoire de stationnement (38) du véhicule (2).

3.  Procédé selon la revendication 2, **caractérisé en ce que** l'orientation théorique attribuée à l'emplacement correspond à l'alignement de la tangente à une trajectoire de stationnement (38) passant par l'emplacement.

4.  Procédé selon la revendication 2 ou 3, **caractérisé en ce que** toutes les trajectoires de stationnement (38) définies par l'intermédiaire des orientations théoriques présentent le même point visé.

5.  Procédé selon l'une quelconque des revendications 1 à 4, **caractérisé en ce que** le deuxième champ d'orientation partiel, lorsqu'il est relié au premier champ d'orientation partiel, est tourné de telle sorte que l'orientation théorique de l'emplacement commun du deuxième champ d'orientation partiel coïncide avec l'orientation théorique de l'emplacement (35) du premier champ d'orientation partiel avec la situation duquel l'emplacement commun est mis en correspondance.

6.  Procédé selon l'une quelconque des revendications précédentes, **caractérisé en ce que** la commande du braquage du véhicule (2) qui se trouve à un emplacement du champ d'orientation est effectuée sur la base de l'écart entre l'orientation réelle occupée par le véhicule à cet emplacement et l'orientation théorique spécifiée pour cet emplacement.

7.  Procédé selon l'une quelconque des revendications précédentes, **caractérisé en ce que** le véhicule (2), dès qu'il a été reconnu que le fait de suivre les orientations théoriques du champ d'orientation constitue un risque de collision avec un obstacle, est guidé suivant un alignement contournant l'obstacle (33a) jusqu'à ce qu'il n'y ait plus de risque de collision.

8.  Procédé selon la revendication 7, **caractérisé en ce que** le braquage nécessaire à l'alignement contournant l'obstacle est calculé à partir de la distance déterminée par le dispositif détecteur selon des règles spécifiées prenant en compte une distance minimale à respecter entre le véhicule et l'obstacle.

9.  Procédé selon la revendication 7 ou 8, **caractérisé en ce que** l'alignement contournant l'obstacle (33a) est réalisé en établissant de nouveau le champ d'orientation au moyen d'un déplacement de l'emplacement commun du deuxième champ d'orientation partiel vers un autre emplacement (35') du premier champ d'orientation partiel dont la distance par rapport à l'obstacle (33a) et l'orientation théorique sont adaptées pour que le véhicule qui se trouve à cet autre emplacement n'entre pas en contact avec l'obstacle (33a) sous l'orientation théorique spécifiée à cet emplacement.

10. Procédé selon la revendication 7, 8 ou 9, **caractérisé en ce que** l'alignement contournant l'obstacle (33a) s'étend en parallèle à la limite latérale de la place de parking (15).

11. Procédé selon l'une quelconque des revendications 7 à 10, **caractérisé en ce que** le point visé (37) des trajectoires de stationnement à la base du champ d'orientation est déplacé.

12. Dispositif pour commander la conduite d'un véhicule pendant d'une manoeuvre de stationnement, comprenant :

    - un dispositif détecteur (24) réalisé pour mesurer une place de parking (15) et pour détecter un obstacle (33a),
    - un dispositif de détermination de situation de véhicule (25) réalisé au moins pour déterminer la position du véhicule et l'alignement du véhicule,
    - un dispositif de détection de sélection de vitesse (23) réalisé pour délivrer un signal représentant la vitesse actuellement enclenchée du véhicule (2),
    - une interface utilisateur (22) pour la saisie d'instructions par le conducteur du véhicule et/ou pour la sortie d'informations à destination du conducteur du véhicule,
    - un dispositif de commande électromécanique (26) pour commander le braquage du véhicule, et
    - un dispositif de guidage de trajectoire de stationnement (21) pour calculer les manoeuvres de braquage à régler par le dispositif de commande électromécanique pour guider le véhicule suivant une trajectoire de stationnement, dans lequel le dispositif de guidage de trajectoire de stationnement (21) présente :

- un dispositif de détermination de place de parking réalisé en coopération avec le dispositif détecteur (24) pour déterminer la géométrie de la place de parking (15) sélectionnée pour garer le véhicule et d'obstacles (33a) autour du véhicule (2),

- un dispositif de réglage de champ d'orientation réalisé pour régler un champ d'orientation qui détermine un certain nombre d'emplacements à l'intérieur de la place de parking (15) sélectionnée et autour de la place de parking sélectionnée et attribue à chaque emplacement respectivement une orientation théorique, dans lequel le champ d'orientation se compose d'un premier champ d'orientation partiel et d'un deuxième champ d'orientation partiel, le premier champ d'orientation partiel comprenant les orientations théoriques attribuées à la place de parking (15) et le deuxième champ d'orientation partiel comprenant les orientations théoriques attribuées à un point angulaire (33) de la place de parking (15), dans lequel toutes les sections de trajectoire de stationnement (34) définies par l'intermédiaire des orientations théoriques des emplacements du deuxième champ d'orientation partiel se terminent par un emplacement commun, et dans lequel le deuxième champ d'orientation partiel est relié au premier champ d'orientation partiel de telle sorte que la situation de l'emplacement commun des sections de trajectoire de stationnement du deuxième champ d'orientation partiel coïncide avec la situation d'un emplacement (35) du premier champ d'orientation partiel dont la distance par rapport au point angulaire de la place de parking est suffisante pour que le véhicule se trouvant à cet emplacement n'entre pas en contact avec le point angulaire (33) de la place de parking (15) spécifiée à cet emplacement,

- un dispositif d'écart d'alignement réalisé pour déterminer l'écart de l'alignement actuel du véhicule à un emplacement par rapport à l'orientation théorique spécifiée par le champ d'orientation pour cet emplacement, et

- un dispositif de spécification de braquage réalisé pour calculer une spécification de braquage pour le dispositif de commande électromécanique (26) sur la base de l'écart d'alignement du véhicule (2) par rapport à l'orientation théorique et pour retransmettre la spécification de braquage au dispositif de commande électromécanique (26).

13. Dispositif selon la revendication 12, **caractérisé en ce que** le dispositif de détermination de situation de véhicule est réalisé pour déterminer la position du véhicule et l'alignement du véhicule sur la base de la mesure du mouvement d'au moins une roue du véhicule (2).

14. Dispositif selon la revendication 12 ou 13, **caractérisé en ce que** le dispositif de guidage de trajectoire de stationnement (21) est réalisé pour exécuter un procédé selon l'une quelconque des revendications 1 à 11 et/ou **en ce que** le dispositif de guidage de trajectoire de stationnement (21) comprend un dispositif de traitement de données.

15. Produit de programme informatique pour commander la conduite d'un véhicule pendant une manoeuvre de stationnement, dans lequel produit de programme informatique présente une série d'états physiquement différenciables qui sont lisibles et exécutables par un dispositif de traitement de données et qui représentent une séquence d'instructions qui exécutent un procédé selon l'une quelconque des revendications 1 à 11 lorsqu'elles sont exécutées sur le dispositif de traitement de données.

FIG 1

FIG 2

FIG 3

# FIG 4

# FIG 5

## FIG 6

## FIG 7

## FIG 8

## FIG 9

# FIG 10

Beginn des Einparkvorgangs — S0

S1

Messen von Fahrzeugposition und -ausrichtung

S2 — Ist Parken beendet?

Ja →

S3 — Ausgabe eines Haltesignals an die Bedienschnittstelle

Nein ↓

S4 — In welchem Feld befindet sich das Fahrzeug?

Übergabefeld

Basisfeld

S5 — Nachschlagen der Ausrichtung im Basisfeld anhand der Fahrzeugposition

S7 — Nachschlagen der Ausrichtung im Übergabefeld anhand der Fahrzeugposition

Nein ↓

S8 — Melden Sensoren ein Hindernis?

Ja →

Nein

S6 — Melden Sensoren ein Hindernis?

Ja →

S9 — Berechnen der Notfall-Ausrichtung anhand der Sensordaten

Nein

S10 — Berechnen des erforderlichen Lenkeinschlags anhand der Ausrichtungsabweichung

S11 — Ausgabe des erforderlichen Lenkeinschlags an Lenksteuerung

## FIG 11A

## FIG 11B

FIG 12A   v=1.5 meter/sekunde

FIG 12B   v=2.5 meter/sekunde

## FIG 13A

## FIG 13B

## FIG 14A

## FIG 14B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2728859 A